(19) **Europäisches Patentamt**
**European Patent Office**
**Office européen des brevets**

(11) **EP 2 959 738 B1**

(12) **EUROPEAN PATENT SPECIFICATION**

(45) Date of publication and mention
of the grant of the patent:
**24.04.2019 Bulletin 2019/17**

(51) Int Cl.:
*H04W 24/02* (2009.01)     *H04W 74/00* (2009.01)
*H04W 48/06* (2009.01)     *H04W 16/32* (2009.01)
*H04W 48/10* (2009.01)

(21) Application number: **13710310.7**

(22) Date of filing: **22.02.2013**

(86) International application number:
**PCT/EP2013/053617**

(87) International publication number:
**WO 2014/127833 (28.08.2014 Gazette 2014/35)**

(54) **SECTOR INDIVIDUAL CONTROL OF ACCESS TO A CELL OF A MOBILE NETWORK**

SEKTOREINZELSTEUERUNG DES ZUGANGS ZU EINEM MOBILTELEFON IN EINEM MOBILFUNKNETZ

COMMANDE INDIVIDUELLE DE SECTEUR D'ACCÈS À UNE CELLULE D'UN RÉSEAU DE TÉLÉPHONIE MOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.12.2015 Bulletin 2015/53**

(73) Proprietor: **Telefonaktiebolaget LM Ericsson
(publ)
164 83 Stockholm (SE)**

(72) Inventors:
• **ZHAO, Wei
S-16974 Solna (SE)**
• **SUN, Ying
S-17272 Sundbyberg (SE)**

(74) Representative: **Ericsson
Patent Development
Torshamnsgatan 21-23
164 80 Stockholm (SE)**

(56) References cited:
**WO-A1-2013/020209**

• **HUAWEI ET AL: "RA response window for sTAG",
3GPP DRAFT; R2-123538 RA RESPONSE
WINDOW FOR STAG, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE , vol. RAN WG2, no. Qingdao,
China; 20120813 - 20120817 7 August 2012
(2012-08-07), XP050665602, Retrieved from the
Internet:
URL:http://www.3gpp.org/ftp/tsg_ran/WG2_RL
2/TSGR2_79/Docs/ [retrieved on 2012-08-07]**
• **INTEL CORPORATION: "Consideration on RA
response window for sTAG", 3GPP DRAFT;
R2-123945, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE , vol. RAN
WG2, no. Qingdao, China; 20120813 - 20120817 6
August 2012 (2012-08-06), XP050665407,
Retrieved from the Internet:
URL:http://www.3gpp.org/ftp/tsg_ran/WG2_RL
2/TSGR2_79/Docs/ [retrieved on 2012-08-06]**

- NEW POSTCOM: "Consideration on RA response window size for SCell", 3GPP DRAFT; R2-123485_CONSIDERATION ON RA RESPONSE WINDOW SIZE FOR SCELL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Qingdao, China; 20120813 - 20120817 7 August 2012 (2012-08-07), XP050665586, Retrieved from the Internet: URL:http://www.3gpp.org/ftp/tsg_ran/WG2_RL2/TSGR2_79/Docs/ [retrieved on 2012-08-07]

**Description**

Technical Field

The present invention relates to methods for controlling access to a cell of a mobile network and to corresponding devices.

Background

To address increasing performance demand in mobile networks, a solution referred to as heterogeneous network deployment may be used to provide an enhanced higher data rate for a given user equipment (UE) and/or to increase the network capacity, e.g., in terms of UEs which may be served in a given coverage region. In such heterogeneous network deployment, it is possible to supplement the coverage region by one or more further radio stations, also referred to as pico stations. The pico stations may be low power nodes with a reduced spatial coverage as compared to primary radio stations used for providing basic coverage. In a heterogeneous network deployment such primary radio station is also referred to as macro station. Aspects concerning coordinated operation of such macro and pico stations in the case of the LTE (Long Term Evolution) radio access technology specified by 3GPP (3rd Generation Partnership Project) are discussed in 3GPP Technical Report (TR) 36.819 V11.1.0 (2011-12).

As illustrated in Fig. A.1-3 of 3GPP TR 36.819, the macro and pico stations can be deployed to serve separate cells. Another scenario as illustrated in Fig. A-1-4 of 3GPP TR 36.819 involves using the macro and pico stations to serve a shared cell. The coverage regions of the macro and pico stations are also referred to as sectors of the cell. In a shared cell deployment, the same cell identifier (cell ID) is used by the macro and pico stations. The macro station may provide basic spatial coverage of the cell, while the pico station(s) may be used to enhance capacity and data rates of the cell. In such shared cell scenario, the macro station may also be responsible for providing system information which is needed by UEs for connecting to the cell. For example, in the case of the LTE radio access technology, such system information is transmitted in information elements referred to as SIB1 and SIB2. In a heterogeneous deployment corresponding to the latter scenario, the pico stations are connected to a cell controller formed by an evolved Node B (eNB) by backhaul connections, e.g., using optical fiber technology as mentioned in 3GPP TR 36.819.

In particular in the case of a large number of pico stations in a cell providing the backhaul connections may involve significant cost, which may be addressed by implementing the backhaul connections of the pico stations with relaxed latency requirements as compared to a backhaul connection used for the macro station. Such relaxed backhaul requirements may result in different delays on the backhaul connections. This may adversely affect the performance of some sectors of the cell.

Specifically, the delay on the backhaul connection may adversely affect a random access procedure of a UE in the cell. Such random access procedure is typically controlled on the basis of time windows defining a maximum size between two messages of the random access procedure. In the random access procedure as specified for the LTE radio access technology, such time windows are referred to as Ra-responseWindowSize and mac-ContentionResolutionTimer. In the above-mentioned heterogeneous deployment scenario, the time windows are set by the eNB and applied to all UEs in the cell by the system information transmitted by the macro station. Due to an increased delay between two such messages, caused by the delay of the backhaul connection in certain sectors, there is an increased risk of the random access procedure failing. On the other hand, a too conservative setting of the time windows may unduly slow down the random performance of some sectors, e.g., of the sector served by the macro station. Similar problems due to a delay introduced by a backhaul connection of a radio station may also exist in other network deployments.

Further, the shared cell scenario may also cause a complexity problem. In particular, resources for sending random access preamble may be shared over the entire cell. This means that the random access preamble may need to be decoded simultaneously for a large number of sectors, which may require significant processing resources.

Accordingly, there is a need for techniques which allow for efficiently controlling access to a cell of a mobile network.

WO 2014/020209 A1 discloses methods and systems at a user equipment, low power access node and first access node operating in a wireless network having a plurality of access nodes comprising a first access node and at least one low power access node having lower transmit power than the first access node, wherein the user equipment receives stronger downlink signals from the first access node than from the at least one low power access node. The method at the user equipment determining, by the user equipment, whether a low power access node is better for uplink data transmission than the first access node, and if the low power access node is better for uplink data transmission, sending from the user equipment to the low power access node, a random access preamble directed to the first access node.

Documents R2-123538 "RA response window for sTAG (SCell Timing Advance Group)", R2-123945 "Consideration on RA response window for sTAG" and R2-123485 "Consideration on RA response window size for SCell" (all 3GPP TSG-RAN WG2 #79, August 13-17, 2012, Qingdao, China) relate to RA (Random Access) response window size for Scells.

Summary

The invention is set out in the appended set of claims. According to an embodiment of the invention, a method of controlling access to a cell of a mobile network is provided. According to the method, a transmission delay of a backhaul connection of a radio station serving the cell is determined. Depending on the transmission delay, at least one time window is determined. The at least one time window defines a maximum allowed time between two messages of a random access procedure. The at least one time window is indicated via the radio station to one or more user equipments in the cell. The method may be implemented by a cell controller of the cell, e.g., an eNB, or by the radio station.

According to a further embodiment of the invention, a method of controlling access to a cell of a mobile network is provided. According to the method, individual system information is determined. This is accomplished for each of multiple radio stations serving the cell. The individual system information is applicable in a coverage region of this radio station. For each of the radio stations the determined individual system information is indicated via the radio station to one or more UEs in the coverage region of this radio station. The method may be implemented by a cell controller of the cell, e.g., an eNB.

According to a further embodiment of the invention, a method of controlling access to a cell of a mobile network is provided. According to the method, a UE receives first individual system information from a first radio station serving the cell. Further, the UE receives second individual system information from a second radio station serving the cell. The UE selects one of the first individual system information and the second individual system information and applies the selected one of the first system information and the second system information for controlling one or more accesses to the cell.

According to a further embodiment of the invention, a cell controller for serving a cell of a mobile network is provided. The cell controller comprises at least one processor and at least one interface for establishing a backhaul connection to a radio station serving the cell. The at least one processor is configured to:

- determine a transmission delay of the backhaul connection,
- depending on the transmission delay, determine at least one time window defining a maximum allowed time between two messages of a random access procedure, and
- via the radio station, indicate the at least one time window size to one or more user equipments in the cell.

According to a further embodiment of the invention, a radio station for serving a cell of a mobile network is provided. The radio station comprises at least one processor, an interface for establishing a backhaul connection to a cell controller of the cell, and a radio interface. The at least one processor is configured to:

- determine a transmission delay of the backhaul connection,
- depending on the transmission delay, determine at least one time window defining a maximum allowed time between two messages of a random access procedure, and
- via the radio interface, indicate the at least one time window size to one or more user equipments in the cell.

According to a further embodiment of the invention, a cell controller for serving a cell of a mobile network is provided. The cell controller comprises at least one processor and at least one interface for connecting to multiple a radio stations serving the cell. The at least one processor is configured to:

- for each of the radio stations, determine individual system information which is applicable in a coverage region of the radio station, and

for each of the radio stations, indicate the determined individual system information via the radio station to one or more user equipments in the coverage region of the radio station.

According to a further embodiment of the invention, a user equipment connecting to a cell of a mobile network is provided. The user equipment comprises at least one processor and a radio interface. The at least one processor is configured to:

- via the radio interface, receive first individual system information from a first radio station serving the cell,
- via the radio interface, receive second individual system information from a second radio station serving the cell,
- select one of the first individual system information and the second individual system information, and
- apply the selected one of the first system information and the second system information for controlling one or more accesses to the cell.

According to a further embodiment of the invention, a computer program product comprising program code to be executed by at least one processor of a cell controller for serving a cell of a mobile network is provided. Execution of the program code causes the at least one processor to perform steps of a method comprising:

- determining a transmission delay of a backhaul connection of a radio station serving the cell,
- depending on the transmission delay, determining at least one time window defining a maximum allowed time between two messages of a random access procedure, and
- via the radio station, indicating the at least one time window to one or more user equipments in the cell.

According to a further embodiment of the invention, a computer program product comprising program code to be executed by at least one processor of a radio station for serving a cell of a mobile network is provided. Execution of the program code causes the cell controller to perform steps of a method comprising:

- determining a transmission delay of a backhaul connection of the radio station,
- depending on the transmission delay, determining at least one time window defining a maximum allowed time between two messages of a random access procedure, and
- indicating the at least one time window to one or more user equipments in the cell.

According to a further embodiment of the invention, a computer program product comprising program code to be executed by at least one processor of a cell controller for serving a cell of a mobile network is provided. Execution of the program code causes the radio station to perform steps of a method comprising:

- for each of the radio stations, determining individual system information which is applicable in a coverage region of the radio station, and
- for each of the radio stations, indicating the determined individual system information via the radio station to one or more user equipments in the coverage region of the radio station.

According to a further embodiment of the invention, a computer program product comprising program code to be executed by at least one processor of a UE for connecting to a cell of a mobile network is provided. Execution of the program code causes the UE to perform steps of a method comprising:

- receiving first individual system information from a first radio station serving the cell,
- receiving second individual system information from a second radio station serving the cell,
- selecting one of the first individual system information and the second individual system information, and
- applying the selected one of the first system information and the second system information for controlling one or more accesses to the cell.

Brief Description of the Drawings

Fig. 1 schematically illustrates a heterogeneous network deployment in which control of cell access according to an embodiment of the invention may be applied.

Fig. 2 shows a signalling diagram of a random access procedure which is subject to control in accordance with an embodiment of the invention.

Figs. 3A and 3B show exemplary shared cells in which control of cell access according to an embodiment of the invention may be applied by individualized provision of system information in different sectors of the cell.

Fig. 4 shows a flowchart for illustrating a method according to an embodiment of the invention.

Fig. 5 shows a flowchart for illustrating a further method according to an embodiment of the invention.

Fig. 6 shows a flowchart for illustrating a further method according to an embodiment of the invention.

Fig. 7 shows a flowchart for illustrating a further method according to an embodiment of the invention.

Fig. 8 schematically illustrates implementation of a cell controller according to an embodiment of the invention.

Fig. 9 schematically illustrates implementation of a radio station according to an embodiment of the invention.

Fig. 10 schematically illustrates implementation of a UE according to an embodiment of the invention.

Detailed Description of Embodiments

In the following, concepts in accordance with exemplary embodiments of the invention will be explained in more detail and with reference to the accompanying drawings. The illustrated embodiments relate to concepts for controlling a access to a cell of a mobile network. The embodiments specifically refer to a scenario using LTE radio access technology and a heterogeneous network deployment with a shared cell served by multiple radio stations, i.e., a macro station and one or more pico stations. That is to say, the cell is provided with multiple sectors served by the different radio stations, and the different radio stations use the same cell ID. However, it should be understood that the concepts could also be applied in connection with other network deployments, e.g., homogeneous deployments using multiple radio stations of substantially the same power, or other radio access technologies, e.g., Universal Mobile Telecommunications System (UMTS) radio access technology.

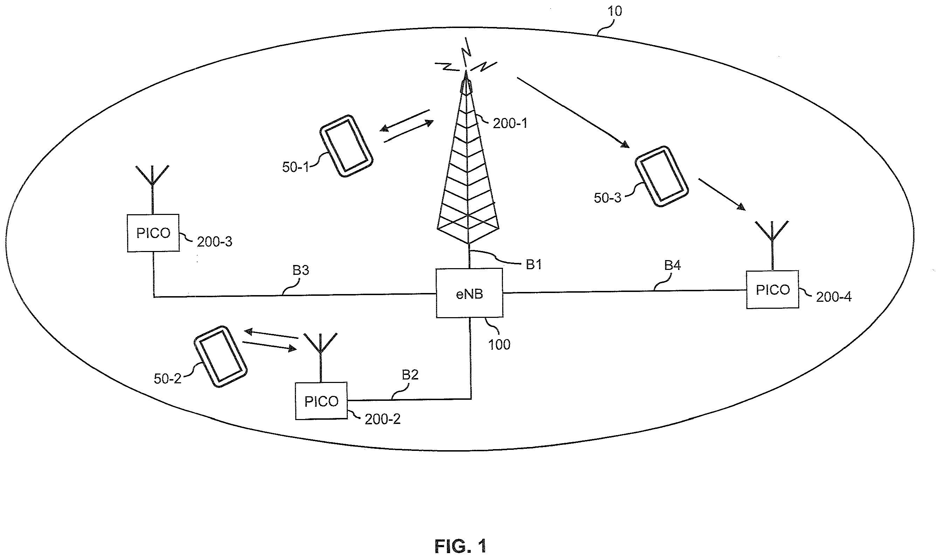

Fig. 1 schematically illustrates an exemplary cell 10 of the mobile network and multiple UEs 50-1, 50-2, 50-3 which are connected to the cell 10. The UEs 50-1, 50-2, 50-3 may be mobile phones, portable computers, or some other type of UE.

The cell 10 is served by multiple radio stations 200-1, 200-2, 200-3, 200-4 which are controlled by a cell controller 100. In accordance with the illustrated LTE scenario, the cell controller 100 is implemented as an eNB. The radio stations 200-1, 200-2, 200-3, 200-4 are implemented as a macro station 200-1 and multiple pico stations 200-2, 200-3, 200-4. The macro station 200-1 provides basic coverage of the cell 10, while the pico stations 200-2, 200-3, 200-4 are deployed within the coverage region of the macro station 200-1 to enhance data rate provided to the UEs 50-1, 50-2, 50-3 and/or capacity of the cell 10 in terms simultaneously of serving the UEs 50-1, 50-2, 50-3. Each of the radio stations 200-1, 200-2, 200-3, 200-4 is provided with a backhaul connection B1, B2, B3, B4 to the cell controller 100. In the illustrated scenario, it is assumed that the backhaul connections B1, B2, B3, B4 are configured differently. In particular, the backhaul connection B1 of the macro station 200-1 may be implemented as a low latency connection, e.g., using optical fiber technology, whereas the backhaul connections B2, B3, B4 of the pico stations may be implemented using relaxed latency requirements, e.g., using an Ethernet based electrical link.

As further illustrated, the UEs 50-1, 50-2, 50-3 may connect to the cell 10 in various ways. For example, a radio connection may be established via the macro station 200-1, as illustrated for the UE 50-1. Further, a radio connection may be established via one of the pico stations 200-2, 200-3, 200-4, as illustrated for the UE 50-2, which is connected to the pico station 200-2. Still further, a radio connection may be established via multiple radio stations, as illustrated for the UE 50-3, which is connected to the macro station 200-1 for receiving downlink transmissions and is connected to the pico station 200-4 for sending uplink transmissions.

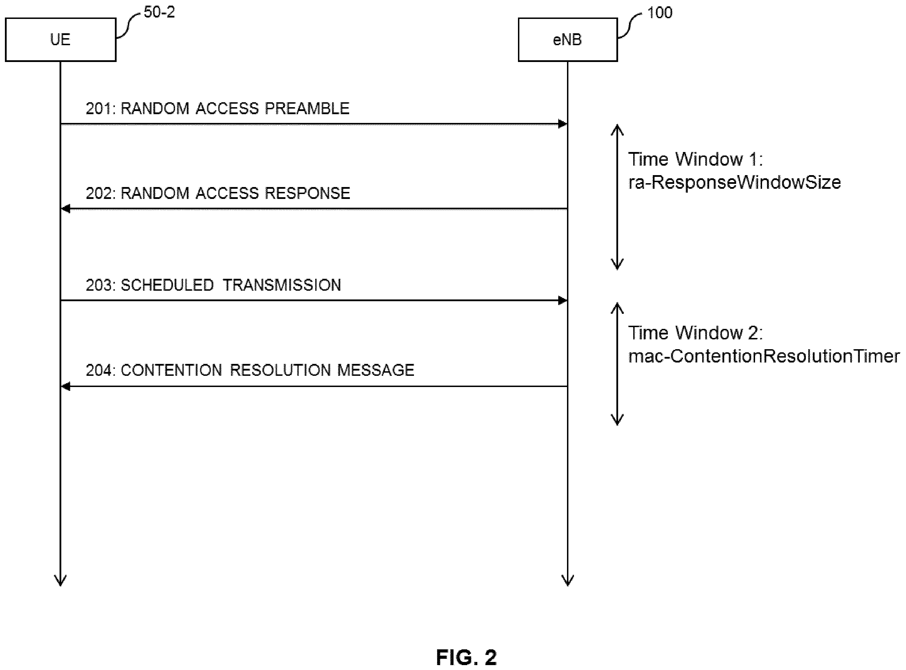

The random access procedure may for example be used by the UEs 50-1, 50-2, 50-3 for performing initial access to the cell, e.g., when establishing the connections as illustrated in Fig. 1. The random access procedure as used in accordance with the illustrated LTE scenario is illustrated in Fig. 2, by referring to an exemplary random access procedure between the UE 50-2 and the eNB 100.

As shown in Fig. 2, the random access procedure involves transmission of a number of messages 201, 202, 203, 204 between the UE 50-2 and the eNB 100. Further, as can be seen from the illustration of Fig. 1, such messages are also conveyed via the backhaul connection B2 between the pico station 200-2 and the eNB 100.

More specifically, the random access procedure may be initiated by the UE 50-2 by sending a random access preamble 201 to the eNB 100. The random access preamble 201 is transmitted on a radio channel provided for this purpose and referred to as Random Access Channel (RACH).

Upon receiving the random access preamble 201, the eNB 100 may assign a temporary identifier, referred to as Cell Temporary Radio Network Identity (C-RNTI), to the UE 50-2 and may allocate resources for an initial scheduled uplink transmission by the UE 50-2. The temporary identifier and an uplink grant indicating the allocated resources for the scheduled uplink transmission are indicated by the eNB 100 to the UE 50-2 in a random access response 202.

The UE 50-2 then sends a scheduled transmission 203 to the eNB 100, using the allocated resources indicated in the uplink grant. The scheduled transmission 203 may in particular include a request for setting up a Radio Resource Control (RRC) connection to the UE 50-2.

Since also other UEs might have received the uplink grant of the random access response 202, there is a possibility that also another UE transmits on the allocated resources. Accordingly, the eNB 100 performs contention resolution by indicating successful receipt of the scheduled transmission 203 in a contention resolution message 204 to the UE 50-2. The random access procedure is thus contention based.

For controlling the random access procedure, time windows defining the maximum allowed time between two messages of the random access procedure are used. These time windows allow for reducing the risk of collisions between multiple random access procedures initiated by different UEs. As illustrated in Fig. 2, a first time window defines the maximum allowed time between sending of the random access preamble 201 by the UE 50-2 and receiving the random access response 202 at the UE 50-2. In the LTE specifications, this first time window is referred to as "ra-ResponseWindowSize". A second time window defines the maximum allowed time between sending of the scheduled transmission 203 by the UE 50-2 and receiving the content resolution message 204 at the UE 50-2. In the LTE specifications, this second time window is referred to as "mac-ContentionResolutionTimer". These time windows are used to set corresponding timers in the UE 50-2, and if the expected response from the eNB 100 is not received before the timer expires, the UE 50-2 assumes a failure of the random access procedure and may re-initiate the random access procedure.

In the exemplary procedure of Fig. 2, the random access response 202 and the contention resolution message 204 are received within the set time windows, and the random access procedure is completed successfully. Accordingly, for example establishment of the RRC connection to the UE 50-2 can proceed as requested in the scheduled transmission 203.

Due to the messages 201, 202, 203, 204 of the random access procedure being transmitted via the backhaul connection B2 between the pico station 200-2 and the eNB 100, a transmission delay introduced by the backhaul connection B2 contributes to the delay between the random access preamble 201 and the random access response 202, and to the delay between the scheduled transmission 203 and the contention resolution message 204 as observed by the UE 50-2. Accordingly, an appropriate setting of the time windows which balances the risk of failure of the random access procedure against the overall speed of the random access procedure will typically differ between radio stations having different transmission delays of the backhaul connection. For example, in the cell as illustrated in Fig. 1 such different transmission delays of the backhaul connection may occur between the macro station 200-1 and the pico stations 200-2, 200-3, 200-4, but also between the different pico stations 200-2, 200-3, 200-4, e.g., due to different configurations of the backhaul connections B2, B3, B4. For example, the transmission delays of the backhaul connections B2, B3, B4 may be 8 ms or more, which means that a size of the ra-ResponseWindowSize of typically 10 ms may need to be increased in order to avoid failure of the random access procedure.

According to the concepts as illustrated herein, this issue may be addressed by determining the transmission delay of the backhaul connection and setting the time window(s) for controlling the random access procedure accordingly. In a shared cell scenario involving multiple radio stations, as for example illustrated in Fig. 1, this allows for achieving an accurate individual setting of the time window(s) for each radio station 200-1, 200-2, 200-3, 200-4 and its served sector. In a random access procedure as illustrated in Fig. 2 this may involve both setting the time window defining the maximum allowed time between the random access preamble 201 and the random access response 202 and the time window defining the maximum allowed time between the scheduled transmission 203 and the contention resolution message 204. However, in some scenarios it may also be sufficient to apply the individualized setting for only one of these time windows.

The individualized setting of the time window(s) may be applied by the eNB 100 by first measuring the transmission delay of the backhaul connection for the different pico stations 200-2, 200-3, 200-4 and determining the window sizes accordingly. In some scenarios, such measurement and individual determination of the time window(s) could also be applied for the macro station 200-1, e.g., in order to obtain a refined time window setting also for the macro station 200-1. Via the different radio stations 200-1, 200-2, 200-3, 200-4, the eNB 100 may then indicate the individually determined time window(s) to the UEs 50-1, 50-2, 50-3 in the cell 10. For this purpose, individualized system information may be transmitted via the different radio stations 200-1, 200-2, 200-3, 200-4. In the LTE radio access technology, the the ra-ResponseWindowSize and the mac-ContentionResolutionTimer are indicated to the UEs in the SIB2. Accordingly, the eNB 100 may control the different radio stations 200-1, 200-2, 200-3, 200-4 to each send individualized versions of the SIB2 thereby indicating different values of the ra-ResponseWindowSize and the mac-ContentionResolutionTimer to the UEs in their respective coverage region. For this purpose, the eNB 100 may allocate individually different resources for the transmission of the SIB2 by the different radio stations 200-1, 200-2, 200-3, 200-4. These individual resources for transmission of the SIB2 may be indicated to the UEs 50-1, 50-2, 50-3 in the SIB1, which may be provided in one version which is sent to all UEs 50-1, 50-2, 50-3 in the shared cell by the macro station 200-1.

For measuring the transmission delay, the eNB 100 may for example send a probe message to a particular radio station 200-1, 200-2, 200-3, 200-4 and evaluate the difference in time between sending the probe message and receiving a response to the probe message from the radio station 200-1, 200-2, 200-3, 200-4. The individual radio stations may for example be addressed by selecting a corresponding interface of the eNB 100 and/or by indicating an address of the radio station 200-1, 200-2, 200-3, 200-4 in the probe message.

The time window size(s) applicable for this radio station 200-1, 200-2, 200-3, 200-4 may then be determined by the eNB 100 by adding the determined transmission delay to a reference time window, e.g., according to:

$$\text{ra-responseWindowSize}_i = \text{ra-responseWindowSize}_{ref} + T_i$$

and/or

$$\text{mac-ContentionResolutionTimer}_i = \text{mac-ContentionResolutionTime}_{ref} + T_i,$$

where $T_i$ denotes the transmission delay for the radio station, i is an index identifying the different radio stations, and the values ra-responseWindowSize$_{ref}$ and mac-Contention ResolutionTime$_{ref}$ denote the respective reference time windows. The reference time windows may for example correspond to values estimated for a scenario with negligible transmission delay of the backhaul connection. The reference time windows may be configured by an operator of the mobile network. For example, the value ra-responseWindowSize$_{ref}$ may be 2 to 10 ms, and the value mac-ContentionResolutionTime$_{ref}$ may be 8 to 64 ms. For an exemplary measured transmission delay of $T_i$ = 8 ms, this would for example result in a value ra-responseWindowSize$_i$ of 10 to 18 ms and a value mac-ContentionResolutionTimer$_i$ of 16 to 72 ms.

In some cases, the eNB 100 may also decide to set time window size to be equal or at least closer to the reference value, irrespective of the transmission delay, thereby ensuring a low latency at the cost of possible random access failures and thus compromised coverage by the radio station 200-1, 200-2, 200-3, 200-4.

The eNB 100 may then indicate the determined time window(s) to the radio station 200-1, 200-2, 200-3, 200-4, thereby causing the radio station 200-1, 200-2, 200-3, 200-4 to send the SIB2 in accordance with the determined time window(s). UEs in the coverage region of the radio station 200-1, 200-2, 200-3, 200-4 may then decode the SIB2 and adjust their operation accordingly by setting the corresponding timers for controlling the random access procedure.

In some scenarios, the individualized determination of the time window(s) may also be performed locally at the radio station 200-1, 200-2, 200-3, 200-4. For this purpose, the radio station 200-1, 200-2, 200-3, 200-4 may measure the delay of its backhaul connection B1, B2, B3, B4. The radio station 200-1, 200-2, 200-3, 200-4 may then indicated the determined value of the time window(s) to the UEs in its coverage area, e.g., by adapting the SIB2 sent from the radio station 200-1, 200-2, 200-3, 200-4, e.g., starting from an initial version provided by the eNB 100. Also in this scenario, the SIB2 may be transmitted in individually allocated resources determined by the eNB 100 and commonly indicated via the macro station to all UEs 50-1, 50-2, 50-3 in the cell 10.

The measurement of the transmission delay at the radio station 200-1, 200-2, 200-3, 200-4 may be performed by the radio station 200-1, 200-2, 200-3, 200-4 sending a probe message to the eNB 100 and evaluating the difference in time between sending the probe message and receiving a response to the probe message from the eNB 100.

The radio station may then determine its individually applicable time window size(s) by adding the determined transmission delay to a reference time window, e.g., according to:

$$\text{ra-responseWindowSize} = \text{ra-responseWindowSize}_{ref} + T$$

and/or

$$\text{mac-ContentionResolutionTimer} = \text{mac-ContentionResolutionTime}_{ref} + T,$$

where T denotes the transmission delay for this radio station, and the values ra-responseWindowSize$_{ref}$ and mac-ContentionResolutionTime$_{ref}$ denote the respective reference time windows. The reference time windows may for example correspond to values estimated for a scenario with negligible transmission delay of the backhaul connection. The reference time windows may be configured by an operator of the mobile network, and may be provided to the radio station by the eNB 100. For example, the value ra-responseWindowSize$_{ref}$ may be 2 to 10 ms, and the value mac-ContentionResolutionTime$_{ref}$ may be 8 to 64 ms.

In some cases, the radio station 200-1, 200-2, 200-2, 200-3, 200-4, may also decide to set time window size to be equal or at least closer to the reference value, irrespective of the transmission delay, thereby ensuring a low latency at the cost of possible random access failures and thus compromised coverage by the radio station 200-1, 200-2, 200-3, 200-4.

The radio station 200-1, 200-2, 200-3, 200-4 may then send the SIB2 in accordance with the determined time window(s). UEs in the coverage region of the radio station 200-1, 200-2, 200-3, 200-4 may then decode the SIB2 and adjust their operation accordingly by setting the corresponding timers for controlling the random access procedure.

In some scenarios, also other criteria may be taken into account when determining the time window(s), e.g., antenna complexity of the radio station 200-1, 200-2, 200-2, 200-3, 200-4 and/or processing performance of the radio station 200-1, 200-2, 200-2, 200-3, 200-4.

In the following, concepts will be further explained which may be used for the individualized provision of system information to the UEs 50-1, 50-2, 50-3 in the different sectors served by the radio stations 200-1, 200-2, 200-2, 200-3, 200-4.

In such concepts, certain system information, e.g., as in LTE radio access technology typically transmitted in MIB, SIB1, or SIB2 may be provided individually to the coverage regions of the different radio stations 200-1, 200-2, 200-2, 200-3, 200-4. In particular, MIB and SIB1 may be provided commonly to all UEs in the cell 10, whereas SIB2 can be provided in different versions to UEs in the respective coverage region of the different radio stations 200-1, 200-2, 200-2, 200-3, 200-4. Accordingly, the SIB2 may be determined individually for the different radio stations 200-1, 200-2, 200-2, 200-3, 200-4. As further explained below, the SIB2 may also be determined individually for different groups of radio stations. For this purpose, individualized resources as allocated for transmission of the SIB2 may be indicated in the SIB1. The UEs may in turn select their individually applicable SIB2 as transmitted by different radio stations 200-1, 200-2, 200-2, 200-3, 200-4.

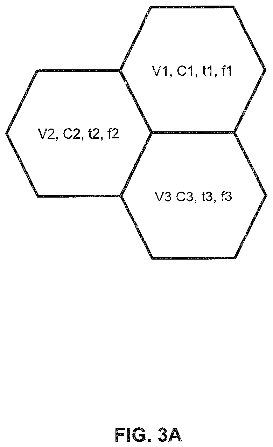

For the individualized provision of system information, all UEs in the cell 10 may initially synchronize with the cell 10 according to the information in the MIB transmitted by the macro station 200-1. Further, the eNB 100 may select radio resources for transmission of the individualized versions of the SIB2. The radio resources selected for the different versions of the SIB2 may be separated in the time domain by selecting different time slots, can be separated in the frequency domain by selecting different transmission frequency ranges, and/or can be separated in the code domain by selecting different coding. Preferably, the resources may be selected to be orthogonal, thereby avoiding mutual interference between the individualized SIB2 transmissions. For example, it is possible to differentiate between individualized SIB2 transmissions by using different time slots, but the same coding and/or frequency range. Of course, it is also possible to use separation in the time domain, frequency domain, and code domain. A corresponding example of a cell is illustrated in Fig. 3A. In Fig. 3A three sectors of the cell are provided with respective allocations of resources for transmission of the SIB2. In Fig. 3A, a first version of the SIB2 is indicated by V1, a second version of the SIB2 is indicated by V2, and a third version of the SIB2 is indicated by V3. A first allocation of resources for transmission of the SIB2 in the code domain is indicated by C1, a second allocation in the code domain is indicated by C2, and a third allocation in the code domain is indicated by C3. Similarly, a first allocation in the time domain is indicated by t1, a second allocation in the time domain is indicated by t2, and a third allocation in the time domain is indicated by t3. Still further, a first allocation in the frequency domain is indicated by f1, a second allocation in the frequency domain is indicated by f2, and a third allocation in the frequency domain is indicated by f3. The different allocations allow for separation of the different SIB2 transmissions at the UE-1, 50-2 , 50-3.

The UEs 50-1, 50-2 , 50-3 in the cell 10 may in turn attempt to receive the SIB2 on all resource indicated in the SIB1. If the UE can concurrently receive multiple versions of the SIB2, it may perform a selection of one version, e.g., on the basis of the signal quality. That is to say, a specific UE may for example select the version of the SIB2 which is received with the strongest signal quality. For improving selection accuracy, also suitable filtering may be applied to the signal quality of receiving the SIB2.

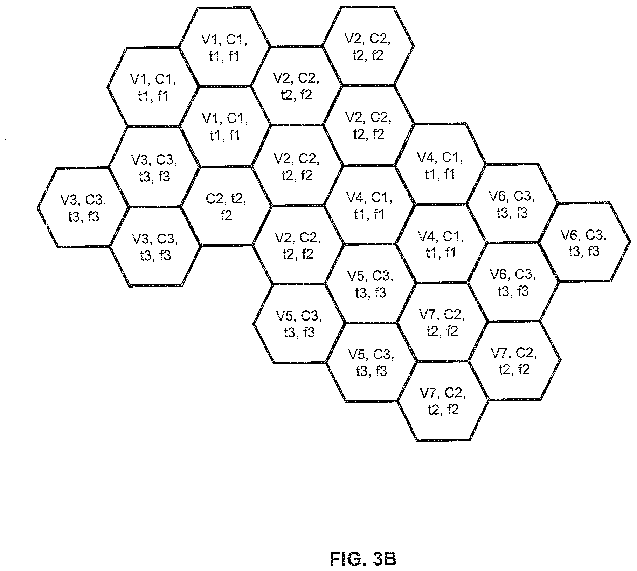

In some scenarios, the different resources for transmission of the SIB2 may also be allocated to different groups of radio stations. A corresponding scenario with a shared cell of 24 sectors is illustrated in Fig. 3B, using the same labeling as in Fig. 3A. As further illustrated in Fig. 3B, it is also possible to allocate the same resources to sectors which are spatially separated from each other, and to use these resources for transmission of different versions of the SIB2. In Fig. 3B, a fourth, fifth, sixth, and seventh version of the SIB2 is indicated by V4, V5, V6, and V7, respectively. Accordingly, also spatial multiplexing can be used for efficient transmission of the different SIB2 versions.

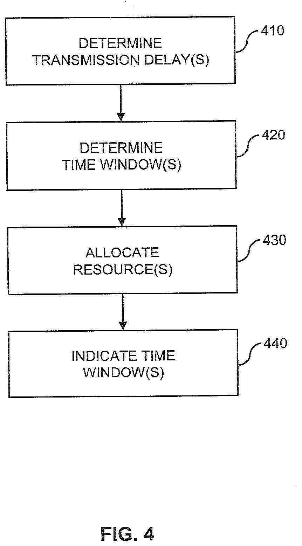

Fig. 4 shows a flowchart for illustrating a method for implementing the above concepts of controlling the random access procedure in a cell controller serving a cell of a mobile network. For example, if the mobile network is implemented using LTE radio access technology, the cell controller may be an eNB, such as the eNB 100.

At step 410, the central controller determines the transmission delay of a backhaul connection of a radio station serving the cell. The radio station may for be example be a pico station, such as the radio stations 200-2, 200-3, 200-4, which operates with lower power as a macro station providing basic spatial coverage of the cell, such as the macro station 200-1. The backhaul connection may connect the radio station to the cell controller, e.g., as illustrated for the backhaul connections B1, B2, B3, B4 of Fig. 1.

The central controller may determine the transmission delay by measuring a time difference between sending a probe message on the backhaul connection and receiving a response to the probe message. In this way, the transmission delay may be determined accurately for the specifically used cell configuration.

At step 420, the cell controller determines at least one time window defining a maximum allowed time between two messages of a random access procedure. The at least one time window is determined depending on the transmission delay as determined at step 410. Other criteria for determining the at least one time window may be used as well, e.g., an antenna configuration of the radio station and/or a processing performance of the radio station.

As mentioned above, the random access procedure may be initiated by a UE when performing initial access to the cell. The at least one time window may include a time window defining a maximum allowed time between a sending a random access preamble by a UE and receiving a random access response by the UE, such as the above-mentioned ra-ResponseWindowSize. In addition or alternatively, the at least one time window may include a time window defining a maximum allowed time between sending a scheduled transmission by a UE and receiving a contention resolution message by the UE, such as the above-mentioned mac-ContentionResolutionTimer.

In some scenarios, the cell controller may determine the at least one time window individually for each of multiple radio stations serving the cell, such as the radio stations 200-1, 200-2, 200-3, 200-4 illustrated in Fig. 1. For this purpose, the cell controller may perform steps 410 and 420 for each of the radio stations and its respective backhaul connection.

At step 430, the cell controller may allocate resources for sending information indicating the determined at least one time window to the UEs. Specifically, if the at least one time windows is determined individually for multiple radio stations, the cell controller may allocate different resources for sending the information for at least two of these multiple radio stations. These different resources may be separated in the time domain, code domain, and/or frequency domain, e.g., as explained above for the sector individual provision of the SIB2.

At step 440, the cell controller indicates the at least one time window to one or more UEs. This is performed via the radio station, e.g., using the above-described individualized transmission of certain system information, in particular in an individualized version of the SIB2 while keeping a common SIB1 for the cell. For this purpose, the resources as allocated at step 430 may be used.

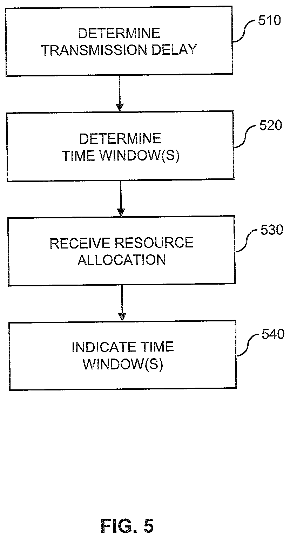

Fig. 5, shows a flowchart for illustrating a method for implementing the above concepts of controlling the random access procedure in a radio station, e.g., in one of the radio stations 200-1, 200-2, 200-3, 200-3, 200-4, in particular in a pico station, such as the radio station 200-2, 200-3, 200-4, which operates with lower power than a macro station providing basic spatial coverage of the cell, such as the macro station 200-1.

At step 510, the radio station determines the transmission delay of its backhaul connection. The backhaul connection may connect the radio station to a cell controller, as illustrated for the backhaul connections B1, B2, B3, B4 of Fig. 1. If the mobile network is implemented using LTE radio access technology, the cell controller may be an eNB, such as the eNB 100.

The radio station may determine the transmission delay by measuring a time difference between sending a probe message on the backhaul connection and receiving a response to the probe message. In this way, the transmission delay may be determined accurately for the specifically used cell configuration.

At step 520, the radio station determines at least one time window defining a maximum allowed time between two messages of a random access procedure. The at least one time window is determined depending on the transmission delay as determined at step 410. Other criteria for determining the at least one time window may be used as well, e.g., an antenna configuration of the radio station and/or a processing performance of the radio station.

As mentioned above, the random access procedure may be initiated by a UE when performing initial access to the cell. The at least one time window may include a time window defining a maximum allowed time between a sending a random access preamble by a UE and receiving a random access response by the UE, such as the above-mentioned ra-ResponseWindowSize. In addition or alternatively, the at least one time window may include a time window defining a maximum allowed time between sending a scheduled transmission by a UE and receiving a contention resolution message by the UE, such as the above-mentioned mac-ContentionResolutionTimer.

At step 530, the radio station may receive an allocation of resources for sending information indicating the determined at least one time window to UEs in the coverage region of the radio station. The radio station may receive this allocation from the cell controller, optionally together with other information to be indicated to the UEs.

At step 540, the radio station indicates the at least one time window to one or more UEs. This may be performed via a radio interface of the radio station, e.g., using the above-described individualized transmission of certain system information, in particular in an individualized version of the SIB2 while keeping a common SIB1 for the cell. For this purpose, the resources as received with the allocation at step 530 may be used.

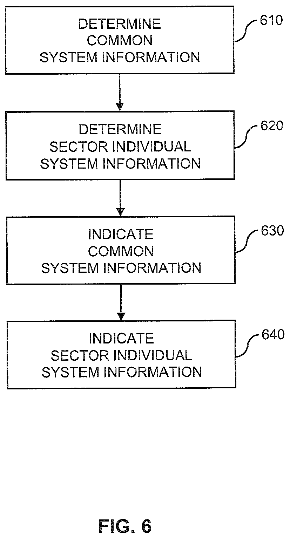

Fig. 6 shows a flowchart for illustrating a method for implementing the above concepts of sector individualized provision of system information in a cell controller serving a cell of a mobile network. For example, if the mobile network is implemented using LTE radio access technology, the cell controller may be an eNB, such as the eNB 100.

At step 610, the cell controller may determine common system information. For example, in the above-mentioned LTE scenario, the common system information may include information as typically provided in the MIB or SIB1. The common system information is applicable to all sectors of the cell, i.e., in all coverage regions of multiple radio stations serving the cell.

At step 620, the cell controller determines individual system information. This is accomplished individually for each of multiple radio stations serving the cell, in a sector individual manner. This may for example involve determining one or more time windows defining a maximum allowed time between two messages of a random access procedure, e.g., such as explained above for the messages 201, 202, 203, 204, and/or determining resources for transmission of a random access preamble, e.g., of the message 201. As mentioned above, this may for example be accomplished depending on transmission delays of the different radio stations.

At step 630, the cell controller may indicate the common system information to UEs in the cell. For example, this may be accomplished via a radio station which has a coverage region that overlaps the coverage regions of the other radio station. For example, in the above-mentioned heterogeneous network deployment, the macro station 200-1 could be used for this purpose, because its coverage region overlaps the coverage regions of the pico stations 200-2, 200-3, 200-4. The cell controller may also allocate different resources for transmission of the individual system information to two of some of the radio stations. These different resources may be separated in the time domain, code domain, and/or frequency domain, e.g., as explained above for the sector individual provision of the SIB2. The different resources may be indicated in the common system information.

At step 640, the cell controller indicates the individual system information to the UEs in the cell. This is accomplished individually for each of the radio stations, by sending the individual system information determined for a certain radio station via this radio station to UEs in the coverage region of this radio station. This sending may be accomplished on the resources as allocated in step 630.

Accordingly, the system information may be provided to the UEs as explained above, by sending common system information to all UEs in the cell, e.g., in the MIB or SIB, and by sending individualized system information to UEs in a certain sector, e.g., in the SIB2.

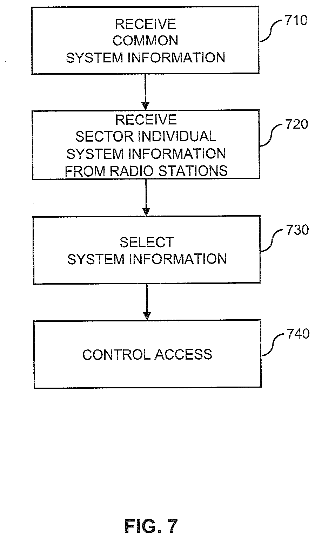

Fig. 7 shows a flowchart for illustrating a method for implementing the above concepts of sector individualized provision of system information in a UE for connecting to a cell of a mobile network, e.g., in the UE 50-1, 50-2, or 50-3. The mobile network may for example be implemented using LTE radio access technology, and the UE may be support LTE radio access technology for connecting to the cell.

At step 710, the UE may receive common system information. For example, in the above-mentioned LTE scenario, the common system information may include information as typically provided in the MIB and/or SIB1. The common system information is applicable to all sectors of the cell, i.e., in all coverage regions of multiple radio stations serving the cell.

At step 720, the UE receives sector individual system information from multiple radio stations serving the cell. In the above-mentioned LTE scenario, the common system information may include information as typically provided in the SIB2.

In particular, the UE may receive first individual system information from a first radio station serving the cell and may receive second individual system information from a second radio station serving the cell. The individual system information may for example indicate one or more time windows defining a maximum allowed time between two messages of a random access procedure, e.g., such as explained above for the messages 201, 202, 203, 204. Alternatively or in addition, the individual system information may indicate resources for transmission of a random access preamble, e.g., of the message 201. Such indicated information may differ between the first and second individual system information.

The individual system information may be received in resources as indicated by the common system information received at step 710. Such resources may differ between some of the radio stations, e.g., may be separated in the time domain, code domain, and/or frequency domain, e.g., as explained above for the sector individual provision of the SIB2.

At step 730, the UE performs selection between the received first and second individual system information. For example, this selection may be based on a reception quality of the individual system information at the UE. Typically, the individual system information received with the highest reception quality would be selected.

At step 740, the UE applies the selected individual system information for controlling one or more accesses to the cell, e.g., for performing a random access procedure as illustrated in Fig. 2.

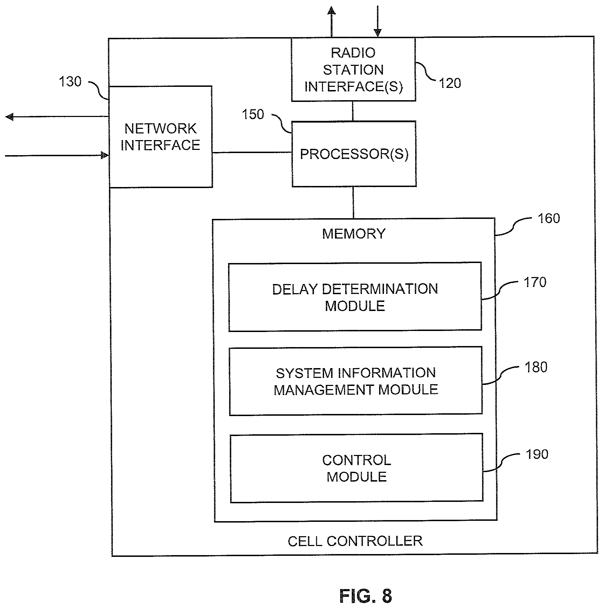

Fig. 8 illustrates exemplary structures which may be used for implementing the above concepts in a cell controller of a mobile network, such as the eNB 100.

As illustrated, the cell controller includes one or more radio station interfaces 120. The radio station interface(s) may for example be used for establishing a backhaul connection to one or more radio stations for serving the same cell. Further, the cell controller may also be provided with a network interface 130 for connecting to other nodes of the mobile network, e.g., for receiving downlink user plane data from the network and/or sending uplink user plane data to the network.

Further, the cell controller includes one or more processors 150 coupled to the interfaces 120, 130, and a memory 160 coupled to the processor(s) 150. The memory 160 may include a read-only memory (ROM), e.g., a flash ROM, a random-access memory (RAM), e.g., a Dynamic RAM (DRAM) or static RAM (SRAM), a mass storage, e.g., a hard disk or solid state disk, or the like. The memory 160 includes suitably configured program code to be executed by the processor(s) 150 so as to implement the above-described functionalities of the cell controller. In particular, the memory 160 may include a delay determination module 170 for implementing the above-described functionalities for determining the transmission delay of one or more backhaul connections. Further, the memory 160 may also include a system information management module 180 for implementing the above-mentioned functionalities of determining sector individual system information, in particular the time window(s) for controlling the random access procedure. Still further, the memory 160 may include a control module 190 for implementing the various control functionalities, e.g., for handling the random access procedure or controlling the radio station(s).

It is to be understood that the structures as illustrated in Fig. 8 are merely schematic and that the cell controller may actually include further components which, for the sake of clarity, have not been illustrated, e.g., further interfaces or processors. Also, it is to be understood that the memory 160 may include further types of program code modules, which have not been illustrated, e.g., program code modules for implementing known functionalities of an eNB. According to some embodiments, also a computer program product may be provided for implementing functionalities of the cell controller, e.g., in the form of a medium storing the program code and/or other data to be stored in the memory 160.

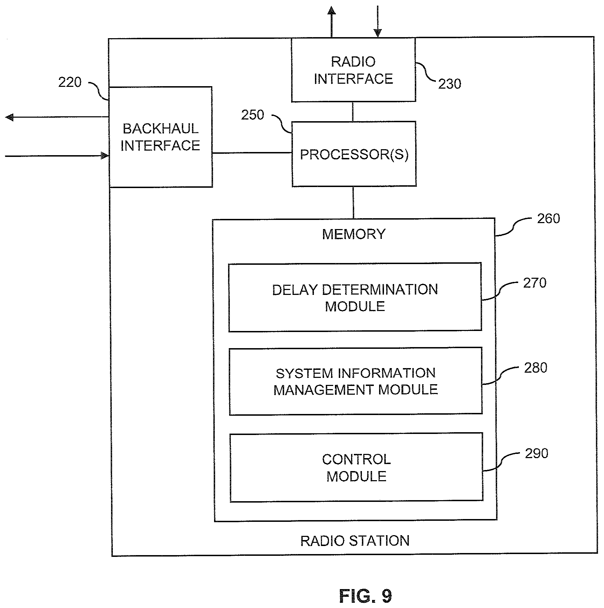

Fig. 9 illustrates exemplary structures which may be used for implementing the above concepts in a radio station of a mobile network, such as one of the radio stations 200-1, 200-2, 200-3, 200-4, in particular in a pico station such as the radio station 200-2, 200-3, 200-4.

As illustrated, the radio station is provided with a backhaul interface 220 for establishing a backhaul connection to a cell controller, such as the eNB 100. Further, the radio station is also provided with a radio interface 230 for connecting to one or more UEs in the coverage region of the radio station.

Further, the radio station includes one or more processors 250 coupled to the interfaces 220, 230, and a memory 260 coupled to the processor(s) 250. The memory 260 may include a ROM, e.g., a flash ROM, a RAM, e.g., a DRAM or SRAM, a mass storage, e.g., a hard disk or solid state disk, or the like. The memory 260 includes suitably configured program code to be executed by the processor(s) 250 so as to implement the above-described functionalities of the radio station. In particular, the memory 260 may include a individual system information determination module 270 for implementing the above-described functionalities for determining the transmission delay of the backhaul connections established via the backhaul interface 220. Further, the memory 260 may also include a system information management module 280 for implementing the above-mentioned functionalities of determining sector individual system information, in particular the time window(s) for controlling the random access procedure, e.g., using one or reference time window(s) provided by the cell controller. Still further, the memory 260 may include a control module 290 for implementing the various control functionalities, e.g., for controlling operations related to transmissions on the radio interface 230.

It is to be understood that the structures as illustrated in Fig. 9 are merely schematic and that the radio station may actually include further components which, for the sake of clarity, have not been illustrated, e.g., further interfaces or processors. Also, it is to be understood that the memory 260 may include further types of program code modules, which have not been illustrated, e.g., program code modules for implementing known functionalities of a radio station. According to some embodiments, also a computer program product may be provided for implementing functionalities of the radio station, e.g., in the form of a medium storing the program code and/or other data to be stored in the memory 260.

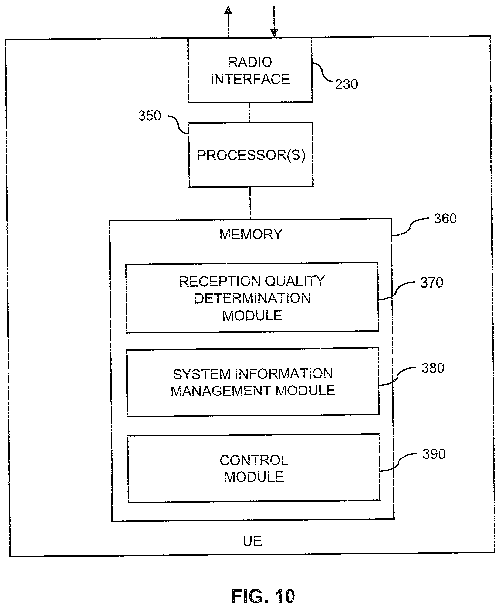

Fig. 10 illustrates exemplary structures which may be used for implementing the above concepts in a UE for connecting to a cell of a mobile network, such as one of the UEs 50-1, 50-2, 50-3.

As illustrated, the UE is provided with a radio interface 230 for connecting to the cell of the mobile network, e.g., via one or more radio stations such as the radio station 200-1, 200-2, 200-3, 200-4.

Further, the UE includes one or more processors 350 coupled to the interface 330 and a memory 360 coupled to the processor(s) 350. The memory 360 may include a ROM, e.g., a flash ROM, a RAM, e.g., a DRAM or SRAM, a mass storage, e.g., a hard disk or solid state disk, or the like. The memory 360 includes suitably configured program code to be executed by the processor(s) 350 so as to implement the above-described functionalities of the UE. In particular, the memory 360 may include a reception quality determination module 370 for implementing the above-described functionalities for determining the reception quality of individual system information. Further, the memory 360 may also include a system information management module 380 for implementing the above-mentioned functionalities of receiving and selecting individual system information from different radio stations serving the cell, e.g., the time window(s) for controlling the random access procedure. Still further, the memory 360 may include a control module 390 for implementing the various control functionalities, e.g., for controlling operations related to transmissions on the radio interface 330, in particular by applying the individual system information for controlling one or more accesses to the cell.

It is to be understood that the structures as illustrated in Fig. 10 are merely schematic and that the UE may actually include further components which, for the sake of clarity, have not been illustrated, e.g., further interfaces or processors. Also, it is to be understood that the memory 360 may include further types of program code modules, which have not been illustrated, e.g., program code modules for implementing known functionalities of a UE. According to some embodiments, also a computer program product may be provided for implementing functionalities of the UE, e.g., in the form of a medium storing the program code and/or other data to be stored in the memory 360.

As can be seen, the concepts as described above may be used for efficiently controlling random access in a mobile network cell. The concepts are specifically beneficial in scenarios in which a shared cell is served by multiple radio stations having differently configured backhaul connections, such as in a heterogeneous network deployment with relaxed backhaul requirements for pico stations. In this case, time windows for controlling the random access procedure may be individually determined for the different sectors served by the radio stations, so that performance of the random access procedure in the sectors served by of the different radio stations may be individually optimized and the risk of failure of the random access procedure balanced against the overall speed of the random access procedure.

It is to be understood that the examples and embodiments as explained above are merely illustrative and susceptible to various modifications. For example, the individualized determination of the time window(s) may be applied in various cell deployments, even including a cell deployment with only one radio station and a single sector. Further, the radio stations may not only be provided in the form of a macro station and one or more pico stations operating at lower power than the macro station. Rather, also homogeneous cell deployments may be used in which the radio stations serving different sectors operate at substantially the same power. Still further, its should be understood that the above-described concepts of indicating individualized system information in the coverage regions of different radio stations may not only be applied to the time window(s) for controlling the random access procedure, but additionally or alternatively also to other types of system information, e.g., as in the case of LTE radio access technology typically provided in the SIB2. For example, also individualized resources for transmitting the random access preamble could be indicated in such individualized system information. Moreover, it is to be understood that the above concepts may be implemented by using correspondingly designed software to be executed by one or more processors of an existing device, or by using dedicated device hardware.

**Claims**

1. A method of controlling access to a cell (10) of a mobile network, said mobile network comprising a radio station (200-1, 200-2, 200-3, 200-4) serving the cell (10) and a cell controller (100) serving the cell (10) and controlling the radio station (200-1, 200-2, 200-3, 200-4), wherein the radio station is connected via a backhaul connection (B1, B2, B3, B4) to the cell controller (100), said method being performed either by the radio station or the cell controller, wherein, when the method is performed by the cell controller, the method comprising:

   determining a transmission delay of the backhaul connection (B1, B2, B3, B4) of the radio station (200-1, 200-2, 200-3, 200-4) serving the cell (10);
   depending on the transmission delay, determining at least one time window defining a maximum allowed time between two messages (201, 202; 203, 204) of a random access procedure; and
   via the radio station (200-1, 200-2, 200-3, 200-4), indicating the at least one time window to one or more user equipments (50-1, 50-2, 50-3) in the cell (10);
   wherein, when the method is performed by the radio station, the method comprising:

   determining a transmission delay of the backhaul connection (B1, B2, B3, B4) of the radio station (200-1, 200-2, 200-3, 200-4) serving the cell (10);
   depending on the transmission delay, determining at least one time window defining a maximum allowed time between two messages (201, 202; 203, 204) of a random access procedure; and
   indicating the at least one time window to one or more user equipments (50-1, 50-2, 50-3) in the cell (10).

2. The method according to claim 1,
   wherein the at least one time window comprises at least one of

   a time window defining a maximum allowed time between a sending a random access preamble (201) by a user equipment (50-1, 50-2, 50-3) and receiving a random access response (202) by the user equipment (50-1, 50-2, 50-3); and
   a time window defining a maximum allowed time between sending a scheduled transmission (203) by a user equipment (50-1, 50-2, 50-3) and receiving a contention resolution message (204) by the user equipment (50-1, 50-2, 50-3).

3. The method according to any one of the preceding claims, comprising:
   determining the transmission delay by measuring a time difference between sending a probe message on the backhaul connection (B1, B2, B3, B4) and receiving a response to the probe message.

4. The method according to any one of the preceding claims, comprising: determining the at least one time window further depending on at least one of

   an antenna configuration of the radio station (200-1, 200-2, 200-3, 200-4); and
   an a processing performance of the radio station (200-1, 200-2, 200-3, 200-4).

5. The method according to any one of the preceding claims wherein, when the method is performed by the cell controller (100), the method further comprises:

for each of multiple radio stations (200-1, 200-2, 200-3, 200-4) serving the cell (10), determining the transmission delay of a backhaul connection (B1, B2, B3, B4) of the radio station (200-1, 200-2, 200-3, 200-4) connected to the cell controller (100);

for each of the radio stations (200-1, 200-2, 200-3, 200-4), determining the at least one time window from the determined transmission delay; and

for each of the radio stations (200-1, 200-2, 200-3, 200-4), indicating the determined at least one time window via the radio station (200-1, 200-2, 200-3, 200-4) to one or more user equipments (50-1, 50-2, 50-3).

6. The method according to claim 5, comprising:
for at least two of the radio stations (200-1, 200-2, 200-3, 200-4), allocating different resources for sending system information indicating the at least one window size.

7. The method according to claim 6,
wherein the different resources are separated in time domain, code domain, and/or frequency domain.

8. A cell controller (100) serving a cell (10) of a mobile network, the cell controller (100) comprising:

at least one processor (150) and at least one interface (120) for establishing a backhaul connection (B1, B2, B3, B4) to a radio station (200-1, 200-2, 200-3, 200-4 serving the cell (10) said cell controller (100) being adapted to control the radio station (200-1, 200-2, 200-3, 200-4),
wherein the at least one processor (150) is configured to:

- determine a transmission delay of the backhaul connection (B1, B2, B3, B4),
- depending on the transmission delay, determine at least one time window defining a maximum allowed time between two messages (201, 202; 203, 204) of a random access procedure, and
- via the radio station (200-1, 200-2, 200-3, 200-4), indicate the at least one time window size to one or more user equipments (50-1, 50-2, 50-3) in the cell (10).

9. The cell controller (100) according to claim 8,
wherein the cell (10) operates according to Long Term Evolution radio access technology and the cell controller (100) is an evolved Node B.

10. The cell controller (100) according to claim 8 or 9,
wherein the at least one processor (150) is configured to perform steps of a method according to any one of claims 2 to 7.

11. A radio station (200-1, 200-2, 200-3, 200-4) serving a cell (10) of a mobile network, the radio station (200-1, 200-2, 200-2, 200-4) comprising:

at least one processor (250), an interface (220) for establishing a backhaul connection (B1, B2, B3, B4) to a cell controller (100) (100) serving the cell (10) and controlling the radio station (200-1, 200-2, 200-3, 200-4), and a radio interface (230),
wherein the at least one processor (250) is configured to:

- determine a transmission delay of the backhaul connection (B1, B2, B3, B4),
- depending on the transmission delay, determine at least one time window defining a maximum allowed time between two messages (201, 202; 203, 204) of a random access procedure, and
- via the radio interface (250), indicate the at least one time window size to one or more user equipments (50-1, 50-2, 50-3) in the cell (10).

12. The radio station (200-1, 200-2, 200-3, 200-4) according to claim 11, wherein the cell (10) operates according to Long Term Evolution radio access technology and the cell controller (100) is an evolved Node B.

13. The radio station (200-1, 200-2, 200-3, 200-4) according to claim 11 or 12,
wherein the at least one processor (250) is configured to perform steps of a method according to any one of claims 2 to 4.

14. A computer program product comprising program code to be executed by at least one processor (150) of a cell controller (100) for serving a cell (10) of a mobile network, thereby causing the cell controller (100) to perform steps of according to any one of claims 1 to 7.

15. A computer program product comprising program code to be executed by a radio station (200-1, 200-2, 200-3, 200-4) for serving a cell (10) of a mobile network, thereby causing the radio station (200-1, 200-2, 200-3, 200-4) to perform steps of according to any one of claims 1 to 4.

**Patentansprüche**

1. Verfahren zur Steuerung von Zugang zu einer Zelle (10) eines Mobilfunknetzwerks, wobei das Mobilfunknetzwerk eine Funkstation (200-1, 200-2, 200-3, 200-4), welche die Zelle (10) versorgt, und eine Zellensteuerung (100) umfasst, welche die Zelle (10) versorgt und die Funkstation (200-1, 200-2, 200-3, 200-4) steuert, wobei die Funkstation über eine Backhaul-Verbindung (B1, B2, B3, B4) mit der Zellensteuerung (100) verbunden ist, und das Verfahren entweder durch die Funkstation oder die Zellensteuerung durchgeführt wird,
   wobei das Verfahren, wenn das Verfahren durch die Zellensteuerung durchgeführt wird, umfasst:

   Bestimmen einer Übertragungsverzögerung der Backhaul-Verbindung (B1, B2, B3, B4) der Funkstation (200-1, 200-2, 200-3, 200-4), welche die Zelle (10) versorgt;
   Bestimmen mindestens eines Zeitfensters, das eine maximal zulässige Zeit zwischen zwei Nachrichten (201, 202; 203, 204) einer Direktzugangsprozedur definiert, in Abhängigkeit von der Übertragungsverzögerung; und
   Hinweisen einer oder mehrerer Benutzereinrichtungen (50-1, 50-2, 50-3) in der Zelle (10) auf das mindestens eine Zeitfenster über die Funkstation (200-1, 200-2, 200-3, 200-4);
   wobei das Verfahren, wenn das Verfahren durch die Funkstation durchgeführt wird, umfasst:

   Bestimmen einer Übertragungsverzögerung (B1, B2, B3, B4) der Funkstation (200-1, 200-2, 200-3, 200-4), welche die Zelle (10) versorgt;
   Bestimmen mindestens eines Zeitfensters, das eine maximal zulässige Zeit zwischen zwei Nachrichten (201, 202; 203, 204) einer Direktzugangsprozedur definiert, in Abhängigkeit von der Übertragungsverzögerung; und
   Hinweisen einer oder mehrerer Benutzereinrichtungen (50-1, 50-2, 50-3) in der Zelle (10) auf das mindestens eine Zeitfenster.

2. Verfahren nach Anspruch 1,
   wobei das mindestens eine Zeitfenster mindestens eines umfasst von
   einem Zeitfenster, das eine maximal zulässige Zeit zwischen einem Senden einer Direktzugangspräambel (201) durch eine Benutzereinrichtung (50-1, 50-2, 50-3) und einem Empfangen einer Direktzugangsantwort (202) durch die Benutzereinrichtung (50-1, 50-2, 50-3) definiert; und
   einem Zeitfenster, das eine maximal zulässige Zeit zwischen einem Senden einer disponierten Übertragung (203) durch eine Benutzereinrichtung (50-1, 50-2, 50-3) und einem Empfangen einer Konfliktauflösungsnachricht (204) durch die Benutzereinrichtung (50-1, 50-2, 50-3) definiert.

3. Verfahren nach einem der vorhergehenden Ansprüche, umfassend:
   Bestimmen der Übertragungsverzögerung durch Messen einer Zeitdifferenz zwischen einem Senden einer Sondierungsnachricht auf der Backhaul-Verbindung (B1, B2, B3, B4) und einem Empfangen einer Antwort auf die Sondierungsnachricht.

4. Verfahren nach einem der vorhergehenden Ansprüche, umfassend:

   Bestimmen des mindestens einen Zeitfensters ferner in Abhängigkeit von mindestens einer von
   einer Antennenkonfiguration der Funkstation (200-1, 200-2, 200-3, 200-4); und
   einer Verarbeitungsleistung der Funkstation (200-1, 200-2, 200-3, 200-4).

5. Verfahren nach einem der vorhergehenden Ansprüche, wobei das Verfahren, wenn das Verfahren durch die Zellensteuerung (100) durchgeführt wird, ferner umfasst:

   Bestimmen der Übertragungsverzögerung einer Backhaul-Verbindung (B1, B2, B3, B4) der Funkstation (200-1, 200-2, 200-3, 200-4), die mit der Zellensteuerung (100) verbunden ist, für jede von mehreren Funkstationen (200-1, 200-2, 200-3, 200-4), welche die Zelle (10) versorgen;

Bestimmen des mindestens einen Zeitfensters für jede der Funkstationen (200-1, 200-2, 200-3, 200-4) aus der bestimmten Übertragungsverzögerung; und

Hinweisen einer oder mehrerer Benutzereinrichtungen (50-1, 50-2, 50-3) auf das bestimmte mindestens eine Zeitfenster über die Funkstation (200-1, 200-2, 200-3, 200-4) für jede der Funkstationen (200-1, 200-2, 200-3, 200-4).

6. Verfahren nach Anspruch 5, umfassend:

Zuweisen verschiedener Ressourcen zum Senden von Systeminformationen, die auf die Größe des mindestens einen Fensters hinweisen, für mindestens zwei Funkstationen (200-1, 200-2, 200-3, 200-4).

7. Verfahren nach Anspruch 6,

wobei die verschiedenen Ressourcen in Zeitdomäne, Codedomäne und/oder Frequenzdomäne getrennt sind.

8. Zellensteuerung (100), die eine Zelle (10) eines Mobilfunknetzwerks versorgt, wobei die Zellensteuerung (100) umfasst:

mindestens einen Prozessor (150) und mindestens eine Schnittstelle (120) zum Herstellen einer Backhaul-Verbindung (B1, B2, B3, B4) mit einer Funkstation (200-1, 200-2, 200-3, 200-4), welche die Zelle (10) versorgt, wobei die Zellensteuerung (100) zum Steuern der Funkstation (200-1, 200-2, 200-3, 200-4) ausgelegt ist, wobei der mindestens eine Prozessor (150) konfiguriert ist zum:

- Bestimmen einer Übertragungsverzögerung der Backhaul-Verbindung (B1, B2, B3, B4),
- Bestimmen mindestens eines Zeitfensters, das eine maximal zulässige Zeit zwischen zwei Nachrichten (201, 202; 203, 204) einer Direktzugangsprozedur definiert, in Abhängigkeit von der Übertragungsverzögerung; und
- Hinweisen einer oder mehrerer Benutzereinrichtungen (50-1, 50-2, 50-3) in der Zelle (10) auf die Größe des mindestens einen Zeitfensters über die Funkstation (200-1, 200-2, 200-3, 200-4).

9. Zellensteuerung (100) nach Anspruch 8,

wobei die Zelle (10) gemäß der LTE (Long Term Evolution)-Funkzugangstechnologie funktioniert, und die Zellensteuerung (100) ein evolvierter Knoten B ist.

10. Zellensteuerung (100) nach Anspruch 8 oder 9,

wobei der mindestens eine Prozessor (150) so konfiguriert ist, dass er Schritte eines Verfahrens nach einem der Ansprüche 2 bis 7 ausführt.

11. Funkstation (200-1, 200-2, 200-3, 200-4), die eine Zelle (10) eines Mobilfunknetzwerks versorgt, wobei die Funkstation (200-1, 200-2, 200-2, 200-4) umfasst:

mindestens einen Prozessor (250), eine Schnittstelle (220) zum Herstellen einer Backhaul-Verbindung (B1, B2, B3, B4) mit einer Zellensteuerung (100), welche die Zelle (10) versorgt und die Funkstation (200-1, 200-2, 200-3, 200-4) steuert, und eine Funkschnittstelle (230), wobei der mindestens eine Prozessor (250) konfiguriert ist zum:

- Bestimmen einer Übertragungsverzögerung der Backhaul-Verbindung (B1, B2, B3, B4),
- Bestimmen mindestens eines Zeitfensters, das eine maximal zulässige Zeit zwischen zwei Nachrichten (201, 202; 203, 204) einer Direktzugangsprozedur definiert, in Abhängigkeit von der Übertragungsverzögerung; und
- Hinweisen einer oder mehrerer Benutzereinrichtungen (50-1, 50-2, 50-3) in der Zelle (10) auf die Größe des mindestens eine Zeitfensters über die Funkschnittstelle (250).

12. Funkstation (200-1, 200-2, 200-3, 200-4) nach Anspruch 11,

wobei die Zelle (10) gemäß der LTE (Long Term Evolution)-Funkzugangstechnologie funktioniert, und die Zellensteuerung (100) ein evolvierter Knoten B ist.

13. Funkstation (200-1, 200-2, 200-3, 200-4) nach Anspruch 11 oder 12,

wobei der mindestens eine Prozessor (250) so konfiguriert ist, dass er Schritte eines Verfahrens nach einem der Ansprüche 2 bis 4 ausführt.

14. Computerprogrammprodukt, umfassend Programmcode, der von mindestens einem Prozessor (150) einer Zellensteuerung (100) zum Versorgen einer Zelle (10) eines Mobilfunknetzwerks ausgeführt werden soll, um dadurch die Zellensteuerung (100) zum Ausführen der Schritte nach einem der Ansprüche 1 bis 7 zu veranlassen.

15. Computerprogrammprodukt, umfassend Programmcode, der von einer Funkstation (200-1, 200-2, 200-3, 200-4) zum Versorgen einer Zelle (10) eines Mobilfunknetzwerks ausgeführt werden soll, um dadurch die Funkstation (200-1, 200-2, 200-3, 200-4) zum Ausführen der Schritte nach einem der Ansprüche 1 bis 4 zu veranlassen.

**Revendications**

1. Procédé de commande d'accès à une cellule (10) d'un réseau mobile, ledit réseau mobile comprenant une station radio (200-1, 200-2, 200-3, 200-4) desservant la cellule (10) et un organe de commande de cellule (100) desservant la cellule (10) et commandant la station radio (200-1, 200-2, 200-3, 200-4), dans lequel la station radio est connectée, par l'intermédiaire d'une connexion de liaison terrestre (B1, B2, B3, B4) à l'organe de commande de cellule (100), ledit procédé étant effectué par la station radio ou par l'organe de commande de cellule, dans lequel, lorsque le procédé est effectué par l'organe de commande de cellule, le procédé comprend :

la détermination d'un retard de transmission de la connexion de liaison terrestre (B1, B2, B3, B4) de la station radio (200-1, 200-2, 200-3, 200-4) desservant la cellule (10) ;
en fonction du retard de transmission, la détermination d'au moins une fenêtre de temps définissant un temps admis maximal entre deux messages (201, 202 ; 203, 204) d'une procédure d'accès aléatoire ; et
par l'intermédiaire de la station radio (200-1, 200-2, 200-3, 200-4), l'indication de l'au moins une fenêtre de temps à un ou plusieurs équipements d'utilisateur (50-1, 50-2, 50-3) dans la cellule (10) ;
dans lequel, lorsque le procédé est effectué par la station radio, le procédé comprend :

la détermination d'un retard de transmission de la connexion de liaison terrestre (B1, B2, B3, B4) de la station radio (200-1, 200-2, 200-3, 200-4) desservant la cellule (10) ;
en fonction du retard de transmission, la détermination d'au moins une fenêtre de temps définissant un temps admis maximal entre deux messages (201, 202 ; 203, 204) d'une procédure d'accès aléatoire ; et
l'indication de l'au moins une fenêtre de temps à un ou plusieurs équipements d'utilisateur (50-1, 50-2, 50-3) dans la cellule (10).

2. Procédé selon la revendication 1,
dans lequel l'au moins une fenêtre de temps comprend au moins l'une de :

une fenêtre de temps définissant un temps admis maximal entre un envoi d'un préambule d'accès aléatoire (201) par un équipement d'utilisateur (50-1, 50-2, 50-3) et une réception d'une réponse d'accès aléatoire (202) par l'équipement d'utilisateur (50-1, 50-2, 50-3) ; et
une fenêtre de temps définissant un temps admis maximal entre un envoi d'une transmission programmée (203) par un équipement d'utilisateur (50-1, 50-2, 50-3) et une réception d'un message de résolution de contention (204) par l'équipement d'utilisateur (50-1, 50-2, 50-3).

3. Procédé selon l'une quelconque des revendications précédentes, comprenant :
la détermination du retard de transmission par une mesure d'une différence de temps entre un envoi d'un message de sonde sur la connexion de liaison terrestre (B1, B2, B3, B4) et une réception d'une réponse au message de sonde.

4. Procédé selon l'une quelconque des revendications précédentes, comprenant :
la détermination de l'au moins une fenêtre de temps dépendant en outre d'au moins l'une de :

une configuration d'antennes de la station radio (200-1, 200-2, 200-3, 200-4) ; et
une performance de traitement de la station radio (200-1, 200-2, 200-3, 200-4).

5. Procédé selon l'une quelconque des revendications précédentes, dans lequel, lorsque le procédé est effectué par l'organe de commande de cellule (100), le procédé comprend en outre :

pour chacune des multiples stations radio (200-1, 200-2, 200-3, 200-4) desservant la cellule (10), la détermination du retard de transmission d'une connexion de liaison terrestre (B1, B2, B3, B4) de la station radio (200-1, 200-2, 200-3, 200-4) connectée à l'organe de commande de cellule (100) ;
pour chacune des stations radio (200-1, 200-2, 200-3, 200-4), la détermination de l'au moins une fenêtre de temps à partir du retard de transmission déterminé ; et
pour chacune des stations radio (200-1, 200-2, 200-3, 200-4), l'indication de l'au moins une fenêtre de temps déterminée par l'intermédiaire de la station radio (200-1, 200-2, 200-3, 200-4) à un ou plusieurs équipements d'utilisateur (50-1, 50-2, 50-3).

6. Procédé selon la revendication 5, comprenant :
pour au moins deux des stations radio (200-1, 200-2, 200-3, 200-4), l'allocation de différentes ressources pour un envoi d'informations de système indiquant l'au moins une taille de fenêtre.

7. Procédé selon la revendication 6,
dans lequel les différentes ressources sont séparées en domaine de temps, en domaine de code et/ou en domaine de fréquences.

8. Organe de commande de cellule (100) desservant une cellule (10) d'un réseau mobile, l'organe de commande de cellule (100) comprenant :

au moins un processeur (150) et au moins une interface (120) pour l'établissement d'une connexion de liaison terrestre (B1, B2, B3, B4) à une station radio (200-1, 200-2, 200-3, 200-4) desservant la cellule (10), ledit organe de commande de cellule (100) étant apte à commander la station radio (200-1, 200-2, 200-3, 200-4),
dans lequel l'au moins un processeur (150) est configuré pour :

- la détermination d'un retard de transmission de la connexion de liaison terrestre (B1, B2, B3, B4),
- en fonction du retard de transmission, la détermination d'au moins une fenêtre de temps définissant un temps admis maximal entre deux messages (201, 202 ; 203, 204) d'une procédure d'accès aléatoire, et
- par l'intermédiaire de la station radio (200-1, 200-2, 200-3, 200-4), l'indication de l'au moins une taille de fenêtre de temps à un ou plusieurs équipements d'utilisateur (50-1, 50-2, 50-3) dans la cellule (10).

9. Organe de commande de cellule (100) selon la revendication 8,
dans lequel la cellule (10) fonctionne selon une technologie d'accès radio d'évolution à long terme et l'organe de commande de cellule (100) est un noeud B évolué.

10. Organe de commande de cellule (100) selon la revendication 8 ou 9,
dans lequel l'au moins un processeur (150) est configuré pour effectuer les étapes d'un procédé selon l'une quelconque des revendications 2 à 7.

11. Station radio (200-1, 200-2, 200-3, 200-4) desservant une cellule (10) d'un réseau mobile, la station radio (200-1, 200-2, 200-3, 200-4) comprenant :

au moins un processeur (250), une interface (220) pour l'établissement d'une connexion de liaison terrestre (B1, B2, B3, B4) à un organe de commande de cellule (100) desservant la cellule (10) et commandant la station radio (200-1, 200-2, 200-3, 200-4), et une interface radio (230),
dans laquelle l'au moins un processeur (250) est configuré pour :

- la détermination d'un retard de transmission de la connexion de liaison terrestre (B1, B2, B3, B4),
- en fonction du retard de transmission, la détermination d'au moins une fenêtre de temps définissant un temps admis maximal entre deux messages (201, 202 ; 203, 204) d'une procédure d'accès aléatoire, et
- par l'intermédiaire de l'interface radio (250), l'indication de l'au moins une taille de fenêtre de temps à un ou plusieurs équipements d'utilisateur (50-1, 50-2, 50-3) dans la cellule (10) .

12. Station radio (200-1, 200-2, 200-3, 200-4) selon la revendication 11,
dans laquelle la cellule (10) fonctionne selon une technologie d'accès radio d'évolution à long terme et l'organe de commande de cellule (100) est un noeud B évolué.

13. Station radio (200-1, 200-2, 200-3, 200-4) selon la revendication 11 ou 12,

dans laquelle l'au moins un processeur (250) est configuré pour effectuer les étapes d'un procédé selon l'une quelconque des revendications 2 à 4.

**14.** Produit de programme informatique comprenant un code de programme à exécuter par au moins un processeur (150) d'un organe de commande de cellule (100) pour desservir une cellule (10) d'un réseau mobile, en amenant de ce fait l'organe de commande de cellule (100) à effectuer des étapes selon l'une quelconque des revendications 1 à 7.

**15.** Produit de programme informatique comprenant un code de programme à exécuter par une station radio (200-1, 200-2, 200-3, 200-4) pour desservir une cellule (10) d'un réseau mobile, en amenant de ce fait la station radio (200-1, 200-2, 200-3, 200-4) à effectuer des étapes selon l'une quelconque des revendications 1 à 4.

**FIG. 1**

EP 2 959 738 B1

**FIG. 2**

FIG. 3A

V1, C1, t1, f1

V3 C3, t3, f3

V2, C2, t2, f2

FIG. 3B

```
┌─────────────────────────┐
│        DETERMINE        │╭── 410
│  TRANSMISSION DELAY(S)   │
└─────────────────────────┘
             │
             ▼
┌─────────────────────────┐
│        DETERMINE        │╭── 420
│     TIME WINDOW(S)      │
└─────────────────────────┘
             │
             ▼
┌─────────────────────────┐
│        ALLOCATE         │╭── 430
│      RESOURCE(S)        │
└─────────────────────────┘
             │
             ▼
┌─────────────────────────┐
│      INDICATE TIME      │╭── 440
│       WINDOW(S)         │
└─────────────────────────┘
```

**FIG. 4**

EP 2 959 738 B1

```
┌─────────────────────┐
│     DETERMINE       │  ⌐510
│ TRANSMISSION DELAY  │
└─────────────────────┘
          │
          ▼
┌─────────────────────┐
│     DETERMINE       │  ⌐520
│   TIME WINDOW(S)    │
└─────────────────────┘
          │
          ▼
┌─────────────────────┐
│  RECEIVE RESOURCE   │  ⌐530
│     ALLOCATION      │
└─────────────────────┘
          │
          ▼
┌─────────────────────┐
│   INDICATE TIME     │  ⌐540
│    WINDOW(S)        │
└─────────────────────┘
```

**FIG. 5**

EP 2 959 738 B1

**FIG. 6**

```
                    ┌─────────────────────┐
                    │      RECEIVE        │      710
                    │      COMMON         │
                    │ SYSTEM INFORMATION  │
                    └─────────────────────┘
                              │
                              ▼
                    ┌─────────────────────┐
                    │      RECEIVE        │      720
                    │  SECTOR INDIVIDUAL  │
                    │ SYSTEM INFORMATION  │
                    │ FROM RADIO STATIONS │
                    └─────────────────────┘
                              │
                              ▼
                    ┌─────────────────────┐
                    │      SELECT         │      730
                    │ SYSTEM INFORMATION  │
                    └─────────────────────┘
                              │
                              ▼
                    ┌─────────────────────┐
                    │                     │      740
                    │   CONTROL ACCESS    │
                    │                     │
                    └─────────────────────┘
```

**FIG. 7**

FIG. 8

FIG. 9

**FIG. 10**

EP 2 959 738 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014020209 A1

**Non-patent literature cited in the description**

- *3GPP Technical Report (TR) 36.819 V11.1.0,* December 2011
- RA response window for sTAG (SCell Timing Advance Group). *R2-123538*
- Consideration on RA response window for sTAG. *R2-123945*
- Consideration on RA response window size for SCell. *R2-123485*
- *3GPP TSG-RAN WG2 #79,* 13 August 2012